Europäisches Patentamt

European Patent Office

Office européen des brevets

(11) Publication number: **0 162 519**
**B1**

(12) **EUROPEAN PATENT SPECIFICATION**

(45) Date of publication of patent specification: **31.08.88**

(21) Application number: **85200764.0**

(22) Date of filing: **14.05.85**

(51) Int. Cl.⁴: **B 60 K 9/04, G 01 L 3/14**

(54) **Intermediate driving gear with the facilities for measuring and controlling a couple.**

(30) Priority: **15.05.84 NL 8401560**

(43) Date of publication of application:
**27.11.85 Bulletin 85/48**

(45) Publication of the grant of the patent:
**31.08.88 Bulletin 88/35**

(84) Designated Contracting States:
**DE FR GB NL**

(56) References cited:
**FR-A-1 002 957**
**FR-A-2 256 403**
**GB-A-1 494 128**
**US-A-3 870 116**
**US-A-4 027 485**

(73) Proprietor: **Van Doorne's Bedrijfswagenfabriek DAF B.V.**
**Geldropseweg 303**
**NL-5645 TK Eindhoven (NL)**

(72) Inventor: **Ludoph, Hemmo Hermannus Johannes**
**Julianalaan 27**
**NL-5591 GA Heeze (NL)**

(74) Representative: **van der Saag, Johannes et al**
**OCTROOIBUREAU VRIESENDORP & GAADE**
**P.O. Box 266**
**NL-2501 AW The Hague (NL)**

Courier Press, Leamington Spa, England.

## Description

Intermediate driving gear, fitted into a hybrid drive system of a vehicle.

The invention relates to an intermediate driving gear, fitted into a drive system, e.g. for a vehicle having a hybrid drive comprising an engine and a flywheel, the intermediate driving gear, pertaining to the flywheel driving, cooperating with a continuously variable transmission, the transmission ratio of which is controllable in such a manner by a control element, operable in dependence on a signal, that kinetic energy is transmitted from the flywheel to and from the vehicle, which intermediate driving gear is formed by a planetary gear system, the sun gear of which is mounted on the flywheel shaft and the planet gears of which engage in an annular gear that can be engaged with a coupling, which planet gears are mounted on a planet gear carrier mounted on a shaft of said transmission.

Such an intermediate driving gear is known from US patent specification 3,870,116.

As is known, when applying a flywheel system for energy storage a transmission with continuously variable transmission ratio is required, for if energy stored in the flywheel is used for accelerating the vehicle, the number of revolutions per minute of the flywheel will decrease on account of the energy supply upon increased driving speed, i.e. upon an increased number of revolutions per minute of the driven shaft.

This is only possible if a transmission with a continuously variable transmission ratio is applied in the driving chain between flywheel and driven shaft.

In this drive system, synchronisation problems occur which are dependent on the difference in revolutions per minute of the rotating parts, of the mass of these parts, and of the desired synchronisation speed.

Particularly for a (mechanical) continuously variable transmission it is hard to set the correct transmission ratio. An accurate setting of the passed-on torque by means of a continuous measuring of said torque and thus controlling the continuous variable transmission is necessary.

The apparatus according to US patent specification lacks such a measuring of said torque, the control element for controlling the transmission ratio of the continuously variable transmission only receiving an external signal which in this case is determined by the position of a foot pedal or the like.

Although it is stated in column 8, the last four lines, of US patent specification 3,870,116 that various torque-responsive and other automatic control devices can be applied for controlling the direction and the extent of the power to be transferred, that does not state or suggest in what place and how the torquemeter has to be devised and how the clutch structure has to be devised between the planetary driving system and the torque meter.

The invention aims to remove this objection and is therefore characterized in that the annular gear can be coupled by means of a friction clutch with an outer ring suspended with reciprocating motion in a housing, to which a measuring element is fitted in order to absorb and measure the force of the torque applied thereto, which force provides said signal for setting said control element.

The present intermediate driving gear has three functions.

1) Measuring the transmitted torque in the driving gear both with and without slip. The measured value is used to set another element in a driving gear, e.g. a continuously variable mechanical transmission, or the desired speed of an engine so as to ensure a favourable fuel consumption.

2) Acting a slipping clutch or synchronization coupling between two large rotating masses, in which case the torque can be chosen as a function of different quantities, viz. $T=F$ (time), $T=F$ (temperature), $T=F$ (position of accelerator pedal). The slip of the clutch can be used in starting, as a safeguard against overload, or as an emergency brake for one of the rotating masses.

3) Reducing the number of revolutions per minute with the aid of a planetary gear train, two elements of said gear train being used as the input and output shaft, respectively. In the present assemblies these elements are the sun gear and the planet carrier. The third element of the planetary gear system, in this case the annular gear, is used as a reaction element which connected to the housing via a disc clutch and a floating outer drum. The reduction of the number of revolutions per minute can thus really be controlled between 0 and infinity.

The present assembly is compact and has been developed for a hybrid driving of a bus, the assembly being mounted between the flywheel and, for example a continuously variable mechanical transmission. The three above-mentioned functions are all employed in the hybrid driving gear, the torque signal, for example, is used to control the continuously variable transmission and the power distribution to two power sources or two brake systems.

The present assembly can be placed between an engine (internal combustion engine, electric motor) and a tool. The starting-up of the tool can be controlled in accordance with a desired characteristic.

The assembly can be placed between two rotating masses of a machine (press, roller etc.) or a vehicle which have to be synchronized.

The present invention can also be employed in the automatic transmission of a vehicle, where an accurate torque signal is required for setting the number of revolutions per minute of the engine and/or the reduction of the transmission in order to achieve minimal fuel consumption.

A planetary driving gear has been chosen, in which the outer gear is braked by a finely controlled friction clutch. The presence of the planetary driving gear makes it possible to measure the torque on a stationary element, which considerably simplifies measurement. Application of the present invention ensures optimum efficiency of the hybrid driving gear.

Finally it is remarked, that from French patent specification 1,002,957 a transmission system, particularly for tool machinery, is known, in one embodiment of which a planetary driving gear is used, in which two groups of planet gears on the one hand engage the internal teeth of an outer ring mounted on the planet gears, acting as a driving belt disc, and on the other hand with the toothed sun wheels, which are fixedly secured to the driving shaft of a change gearbox. The planet gears have been incorporated in a planet gear carrier which is rotatably supported on a housing secured to the change gearbox, the planet gear shafts extending in openings in the housing and restricting the motion of the planet gear carrier. A spring force acting upon one of the planet gear shafts is in balance with the reaction force on the planet gear carrier generated during driving. Onto another extremity of one of the planet gear shafts a displacable contact has been mounted, closing, at the end of the rotary motion via a contact on said side flange, an electric chain providing a signal for stopping the machine if, as the consequence of some default, a sudden increase of the spring force occurs which highly exceeds a set value of the spring force.

The present invention distinguishes itself from the above in that the control element measures the reaction force on the annular gear, not on the planet gear carrier, and moreover in that it can be declutched therefrom by means of a friction clutch, with which the annular wheel can freely rotate.

The invention will now be further explained with the aid of the drawings.

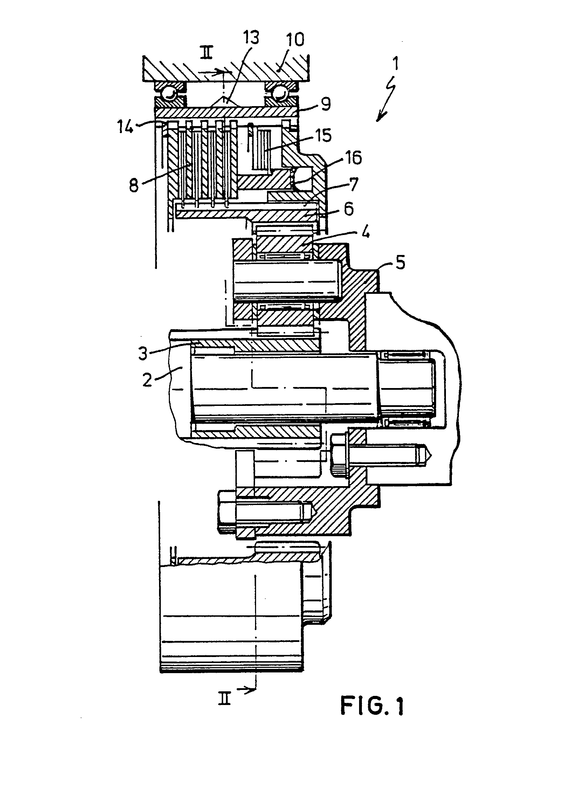

Fig. 1 shows schematically a partial longitudinal section of the present intermediate driving gear.

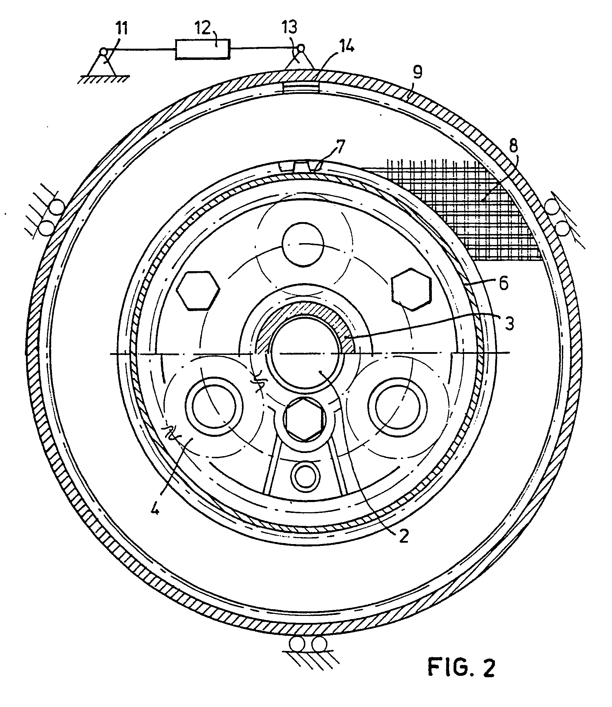

Fig. 2 shows a cross section, viewed along arrows II—II, of Fig. 1.

Fig. 3 shows schematically a possible application of the invention in a flywheel driving gear.

The intermediate driving gear 1, which is fitted between a flywheel 17 and a continuously variable, in the present case mechanical, transmission 19 consists of a flywheel shaft 2 on which sun gear 3 is mounted. The planet gears 4, which are mounted on a planet carrier 5 and engage with the said sun gear, are also in engagement with an annular gear 6. The latter has longitudinal grooves 7, in which the inner circumferences of the plates of a friction clutch 8 engage. This clutch will preferably take the form of a wet plate clutch which can be finely controlled. The outer circumference of the clutch is in engagement with longitudinal grooves 14 in an outer gear 9, which is suspended with reciprocating movement 11 in a housing 10. A measuring element 12 is fitted on the outer gear 9 by means of a supporting element 13, the force exerted on the said measuring member by the torque to be measured being converted in known fashion into a signal which is fed to the element which controls the transmission ratio of the transmission. The clutch is fitted with a sinusoidal spring 15 and an annular collar 16. The planet carrier 5 is connected with the continuously variable transmission in a manner enabling it to rotate.

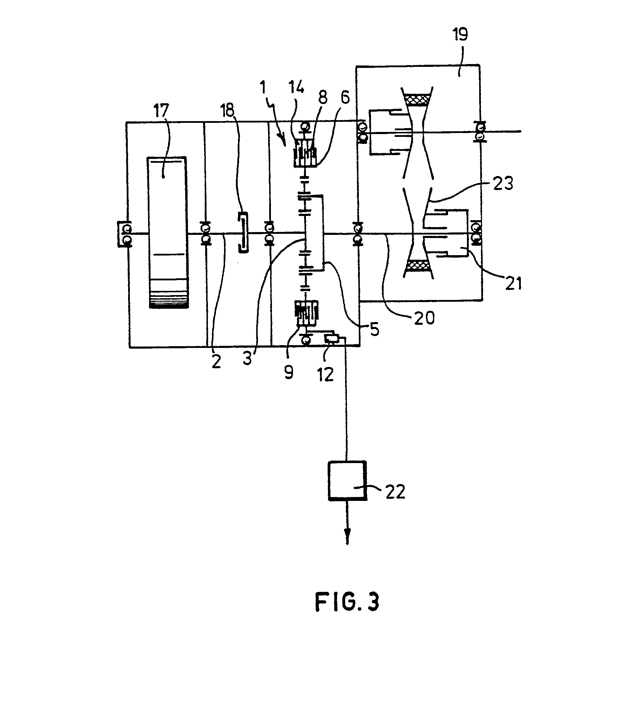

Fig. 3 shows a schematic example of a possible embodiment of the invention in a flywheel driving gear. The intermediate driving gear 1 is on the one hand rotatably connected with the shaft 2 of flywheel 17 via a friction clutch 18 and on the other hand connected with a continuously variable mechanical transmission 19 via a shaft 20. This transmission is provided with an adjusting element 21 which, depending on the torque measured by the measuring element 12, sets the transmission ratio of the transmission 19 via the primary discs 23 of the latter. The signal from the torque meter is, if necessary, converted in a signal converter 22 into a quantity suitable for the control system and this quantity is compared in a comparing element (not shown) with the said quantity. The adjusting element 21 subsequently sets the primary discs 23 in proportion to the signal value difference. The friction clutch 8 is also set as a function of this value.

## Claims

1. Intermediate driving gear (1), fitted into a drive system for a vehicle having a hybrid drive having an engine and a flywheel (17), the intermediate driving gear, pertaining to the flywheel driving, cooperates with a continuously variable transmission (19), the transmission ratio of which is controllable in such a manner by a control element (21), operable in dependence on a signal, that kinetic energy is transmitted from the flywheel to and from the vehicle, which intermediate driving gear is formed by a planetary gear system, the sun gear (3) of which is mounted on the flywheel shaft (2) and the planet gears (4) of which engage in an annular gear (6) that can be engaged with a coupling (8), which planet gears are mounted on a planet gear carrier (5) mounted on a shaft (20) of said transmission, characterized in that the annular gear (6) can be coupled by means of a friction clutch (8) with an outer ring (9) suspended with reciprocating motion in a housing (10), to which a measuring element (12) is fitted in order to absorb and measure the force of the torque applied thereto, which force provides said signal for setting said control element.

2. Intermediate driving gear according to claim 1, characterized in that the friction clutch (8) at its inner circumference engages longitudinal grooves (7) in the annular gear (6), and at its outer circumference engages the longitudinal grooves (14) applied in the outer ring (9).

3. Intermediate driving gear according to claims 1 and 2, characterized in that the friction clutch (8) comprises an axial spring (15) with a sinusoidally corrugated surface, said spring being placed between a stop in the housing of the intermediate driving gear (1) and a collar of a pressure ring, being fitted between the outer plate of the friction clutch and an annular cup (16) defining a space with hydraulic pressure fluid.

## Patentansprüche

1. Zwischengetriebe (1), das in ein Antriebssystem für ein Fahrzeug eingesetzt ist, das einen Hydridantrieb mit einem Motor und einem Schwungrad (17) aufweist, wobei das zu dem Schwungrad gehörende Zwischengetriebe mit einem stufenlos veränderbaren Getriebe (19) zusammenwirkt, dessen Übersetzungsverhältnis derart mit einem in Abhängigkeit von einem Signal betätigbaren Steuerelement (21) steuerbar ist, dass kinetische Energie von dem Schwungrad auf das Fahrzeug und umgekehrt übertragbar ist, wobei das Zwischengetriebe aus einem Planetengetriebe gebildet ist, dessen Sonnenrad (3) auf der Schwungradwelle (2) angeordnet ist und dessen Planetenräder (4) mit einem Ringzahnrad (6) in Eingriff stehen, das mit einer Kupplung (8) kuppelbar ist, wobei die Planetenräder auf einem Planetenträger (5) gelagert ist, der auf einer Welle (20) des besagten Getriebes (19) angeordnet ist, dadurch gekennzeichnet, dass das Ringzahnrad (6) über eine Reibkupplung (8) mit einem in einem Gehäuse (10) hin- und herbeweglich abgestützten Aussenring (9) kuppelbar ist, an dem ein Messelement (12) angebracht ist, um die Kraft des auf diesen aufgebrachten Drehmoments aufzunehmen und zu messen, wobei diese Kraft das Signal zum Einstellen des Steuerelements liefert.

2. Zwischengetriebe nach Anspruch 1, dadurch gekennzeichnet, dass die Reibkupplung (8) an ihrem Innenumfang in Längsnuten (7) des Ringzahnrades (6) eingreift und an ihrem Aussenumfang in Längsnuten (14) des Aussenrings (9) eingreift.

3. Zwischengetriebe nach Anspruch 1 und 2, dadurch gekennzeichnet, dass die Reibkupplung (8) eine Axialfeder (15) mit sinusförmig gewellter Fläche umfasst, wobei diese Feder zwischen einem Anschlag in dem Gehäuse des Zwischengetriebes (1) und einem Kragen eines Druckrings angeordnet ist, der zwischen die Aussenplatte der Reibkupplung und eine ringförmige Manschette (16) eingesetzt ist, die einen Hohlraum mit hydraulischer Druckflüssigkeit begrenzt.

## Revendications

1. Engrenage intermédiaire de transmission (1), monté dans une transmission prévue pour un véhicule comportant un système hybride de propulsion comprenant un moteur et un volant (17), cet engrenage intermédiaire de transmission, appartenant à la transmission du volant, coopère avec une transmission à réglage continu (19) dont le rapport de transmission peut être réglé à l'aide d'un élément de réglage (21), pouvant être commandé sous l'influence d'un signal, d'une manière telle que de l'énergie cinétique est transmise du volant au véhicule et inversement, ce même engrenage intermédiaire de transmission étant constitué par un engrenage épicycloïdal dont le pignon soleil (3) est monté sur l'arbre (2) du volant et dont les pignons planétaires (4) engrènent avec une couronne à dents cylindrique (6) en prise avec laquelle peut venir un accouplement (8), les pignons planétaires étant montés sur un porte-planétaire (5) monté sur un arbre (20) de la transmission à réglage continu, caractérisé en ce que la couronne à dents cylindrique (6) peut être accouplée, à l'aide d'un embrayage à friction (8), à une couronne extérieure (9) portée dans un carter (10) de façon à pouvoir se déplacer en va-et-vient et sur laquelle un élément de mesure (12) est monté afin d'absorber et mesurer l'intensité du couple qui y est appliqué, cette intensité constituant le signal de réglage de l'élément de régulation.

2. Engrenage intermédiaire de transmission suivant la revendication 1 caractérisé en ce que l'embrayage à friction (8) s'engage, par son contour périphérique intérieur, dans des rainures longitudinales (7) mélangées dans la couronne à dents cylindrique (6) et s'engage, par son contour périphérique extérieur, dans des rainures longitudinales (14) mélangées dans la couronne extérieure (9).

3. Engrenage intermédiaire de transmission suivant les revendications 1 et 2, caractérisé en ce que l'embrayage à friction (8) comprend un ressort à surface sinusoïdale disposé axialement (15), ce ressort étant placé entre une butée formée dans le carter de l'engrenage intermédiaire de transmission (1) et une collerette d'un anneau de pression, et étant monté entre le plateau extérieur de l'embrayage à friction et un joint en U annulaire (16) délimitant un volume comportant un fluide hydraulique de pression.

FIG. 1

FIG. 2

FIG.3